# FASCICULE DE BREVET EUROPEEN

(11) **EP 1 963 079 B1**
(45) Date de publication et mention de la délivrance du brevet: **13.10.2010**
(21) Numéro de dépôt: 06847175.4
(22) Date de dépôt: 19.12.2006
(51) Int. Cl.: B29C 70/32

(54) **PROCEDE DE FABRICATION D'UN FUSELAGE D'AERONEF EN MATERIAU COMPOSITE**
VERFAHREN ZUR HERSTELLUNG EINES FLUGZEUGRUMPS AUS VERBUNDMATERIAL
METHOD FOR MANUFACTURING AN AIRCRAFT FUSELAGE IN COMPOSITE MATERIAL

(30) Priorité: 20.12.2005 FR 0553972
(43) Date de publication de la demande: 03.09.2008
(73) Titulaire: AIRBUS OPERATIONS (S.A.S), 31060 Toulouse (FR)
(72) Inventeur: CACCIAGUERRA, Bruno, F-31810 Clermont Le Fort (FR)
(74) Mandataire: Lebrette, Camille
(86) Numéro de dépôt international: PCT/FR2006/051385
(87) Numéro de publication internationale: WO 2007/071879

(56) Documents cités:
- EP-A1- 0 142 697
- EP-A1- 0 444 627
- WO-A2-2006/001860
- FR-A1- 2 766 407
- JP-A- 61 169 394

## Description

### Domaine de l'invention

L'invention concerne un procédé pour fabriquer un fuselage d'aéronef dont la peau externe est réalisée en matériau composite. Le procédé de l'invention permet de réaliser la peau externe, en matériau composite, autour de la structure interne du fuselage, facilitant ainsi le montage de ladite structure interne. L'invention concerne également un fuselage d'aéronef obtenu avec un tel procédé de fabrication.

L'invention trouve des applications dans le domaine de l'aéronautique et, en particulier, dans le domaine de la fabrication de fuselages d'aéronefs.

### Etat de la technique

Le fuselage d'un aéronef est le corps de l'aéronef. La voilure, la dérive, le train d'atterrissage, les réacteurs, et de nombreux autres éléments sont fixés sur le fuselage. La fabrication du fuselage constitue donc une étape importante dans la construction d'un aéronef.

Classiquement, le fuselage de l'aéronef est un corps creux réalisé en métal. Ce corps creux est constitué de panneaux métalliques montés et fixés autour d'une structure interne, généralement métallique,O appelée ossature interne de l'aéronef. Les panneaux métalliques sont assemblés par des fixations et forment, une fois assemblées, la peau externe de l'aéronef. De tels fuselages métalliques sont très répandus de nos jours. Cependant, ils présentent l'inconvénient d'être lourds puisque le fuselage est totalement métallique. Ils présentent, de plus, l'inconvénient de présenter des jonctions, entre les panneaux métalliques, constituant des surépaisseurs. Ces surépaisseurs augmentent la masse et peuvent induire une traînée lorsque l'aéronef est en vol, ce qui est gênant du point de vue aérodynamique.

Pour diminuer la masse du fuselage, les constructeurs aéronautiques cherchent à remplacer certains éléments métalliques par des éléments en matériaux composites. Ces matériaux composites sont utilisés notamment pour la réalisation d'une ou de plusieurs parties du fuselage de l'aéronef, par exemple, pour le carénage ventral de l'aéronef. Ces parties du fuselage sont généralement des panneaux réalisés à partir de fibres sèches préenduites de résine. Ces panneaux sont fabriqués en préparant des nappes ou/et pièces de tissus de fibres sèches pré-enduites d'une résine thermodurcissable, en plaçant ces nappes ou/et pièces de tissus dans un moule puis en chauffant le tout. Sous l'effet de la chaleur, la résine polymérise, permettant au renfort fibreux de conserver la forme du moule. Après refroidissement, le moule est retiré. Un tel procédé de fabrication permet principalement la fabrication de panneaux, c'est-à-dire de pièces à profil ouvert, puisque le moule doit pouvoir être retiré après mise en forme et refroidissement. Il permet difficilement la fabrication de corps creux, en particulier à forme évolutive, par exemple des corps creux de forme conique.

Pour permettre la fabrication, en matériau composite, d'une portion de fuselage à forme évolutive, il existe un procédé qui consiste à fabriquer un tronçon de la peau externe du fuselage d'un aéronef. Ce tronçon de peau externe est réalisé en entourant des nappes de fibres pré-enduites de résine, autour d'un moule ayant la forme souhaitée. Le moule peut être un cylindre creux. Le moule ainsi entouré de nappes de fibres pré-enduites est chauffé afin que la résine polymérise. Après refroidissement, le stratifié obtenu forme la peau externe de l'aéronef. Cette peau externe est détachée du moule, soit par glissement, soit par démontage sur place puis retrait du moule. Lorsque la peau externe à été réalisée, l'ossature interne est introduite à l'intérieur de la peau externe, pièce par pièce, ou par groupe de pièces élémentaires positionnées sur des bâtis complexes. L'ossature interne d'un aéronef est un assemblage de cadres et autres pièces structurales, telles que des lisses et des planchers. L'ossature interne est donc installée en introduisant chaque cadre et pièce structurale de l'ossature à l'intérieur de la peau externe puis en fixant chacune de ces pièces depuis l'intérieur de ladite peau externe. Lorsque des pièces de l'ossature interne sont trop volumineuses, elles sont découpées en plusieurs portions et introduites, portion par portion, dans la peau externe puis fixées entre elles par rivets.

Un tel procédé est difficile à mettre en oeuvre du fait notamment de l'importante superficie de la peau externe à détacher du moule. La peau externe peut comporter en outre des éléments du type surépaisseur qui augmentent encore les difficultés de démoulage. De plus, ce procédé est relativement long à mettre en oeuvre, puisqu'il nécessite l'introduction et la fixation, par groupes élémentaires, ou pièce par pièce, voire portion de pièce par portion de pièce, de toutes les pièces formant l'ossature interne, à l'intérieur de la peau externe.

JP-A-61169394 divulgue les caractéristiques du préambule de la revendication 1.

### Exposé de l'invention

L'invention a justement pour but de remédier aux inconvénients des techniques exposées précédemment. A cette fin, l'invention propose un procédé pour fabriquer un fuselage d'aéronef dont la peau externe est en matériau composite et dont l'ossature interne constitue au moins partiellement le moule de fabrication de la peau externe, et/ou le support dudit moule. Ce procédé propose de monter l'ossature interne puis de fabriquer la peau externe autour de l'ossature interne.

Plus précisément, l'invention concerne un procédé de fabrication d'un fuselage d'aéronef comportant une ossature interne entourée d'une peau externe en matériau composite, **caractérisé en ce que** l'ossature interne constitue au moins partiellement un moule de fabrication de la peau externe en matériau composite.

Ce procédé présente l'avantage de ne nécessiter aucune installation de l'ossature interne après fabrication de la peau externe. Il présente en outre l'avantage de permettre la réalisation d'un fuselage, quel que soit sa forme, sans couture.

Ce procédé peut comporter les opérations suivantes :
- assemblage, autour d'un mandrin reposant sur un bâti, d'une pluralité de cadres et pièces structurales pour former l'ossature interne du fuselage,
- installation d'outillages coques entre les cadres de l'ossature pour obtenir une structure pleine (ces outillages coques peuvent s'étendre à plus de 2 cadres),
- dépôt d'une couche de matériau composite autour de la structure pleine,
- cuisson de la structure pleine recouverte de la couche de matériau composite, et
- retrait des outillages coques pour obtenir l'ossature interne recouverte de la peau externe.

Le procédé de l'invention peut comporter également une ou plusieurs des caractéristiques suivantes :
- la couche de matériau composite est déposée sous la forme d'un ruban de fibres imprégnées d'une résine.
- les cadres de l'ossature interne sont préfabriqués.
- les cadres préfabriqués sont installés d'un seul tenant.
- les outillages coques sont fixés sur les cadres situés de part et d'autre desdites coques.
- les outillages coques sont des portions de cylindres.
- les cadres sont montés sur un bâti apte à soutenir l'ossature interne.
- le bâti est apte à entraîner l'ossature interne en rotation devant un dispositif de placement du matériau composite.
- les outillages coques sont retirées par l'intérieur de l'ossature après avoir été déconnectées de l'ossature interne.
- des ouvertures sont découpées dans la peau externe à l'emplacement des portes et/ou hublots du fuselage.
- les outillages coques sont revêtus d'un matériau favorisant leur démoulage.
- les outillages coques sont réalisés dans un matériau anti-adhésif.
- les outillages coques sont réalisés dans un matériau tel que sa dilatation thermique ne soit pas sensiblement différente de celle de la peau externe.

Le fuselage peut se caractériser en outre par le fait que la peau externe peut être collée sur les cadres formant l'ossature interne.

### Brève description des dessins

La figure 1 représente une ossature interne d'aéronef réalisée selon le procédé de l'invention.
La figure 2 représente une structure pleine (c'est-à-dire équipée d'outillages coques) d'aéronef réalisée selon le procédé de l'invention à partir de l'ossature interne de la figure 1.
La figure 3 représente une vue en coupe partielle d'une ossature interne et d'un outillage coque.
La figure 4 représente schématiquement une portion de fuselage d'aéronef réalisée selon le procédé de l'invention, lorsque la structure pleine est recouverte d'un ruban des fibres préenduites.

### Description détaillée de modes de réalisation de l'invention

Le procédé de l'invention propose de réaliser un fuselage d'aéronef, ou un tronçon d'un fuselage d'aéronef, dans lequel l'ossature interne de l'aéronef constitue au moins une partie du moule et/ou le support du dit moule de fabrication de la peau externe en matériau composite. Dans toute la suite de la description, on considéra la fabrication d'un fuselage d'aéronef dans sa totalité, étant entendu que le procédé peut être mis en oeuvre pour réaliser un tronçon seulement du fuselage d'aéronef. Lorsqu'un tronçon seulement du fuselage est réalisé, ce tronçon peut être assemblé et fixé avec d'autres tronçons en matériaux composites ou en métal.

Le procédé de l'invention consiste à fabriquer l'ossature interne du fuselage à partir de cadres et d'autres pièces structurales, généralement métalliques. Ces cadres et ces pièces sont assemblées les unes avec les autres puis fixées les unes aux autres pour former l'ossature interne. L'assemblage de ces différentes pièces est réalisé autour d'un mandrin reposant sur un bâti. Ce mandrin a pour rôle de soutenir l'ossature interne et de permettre à ladite ossature d'être entraînée dans un mouvement de rotation au moment de la fabrication de la peau externe. Ce rôle d'entraînement en rotation sera décrit plus en détail ultérieurement.

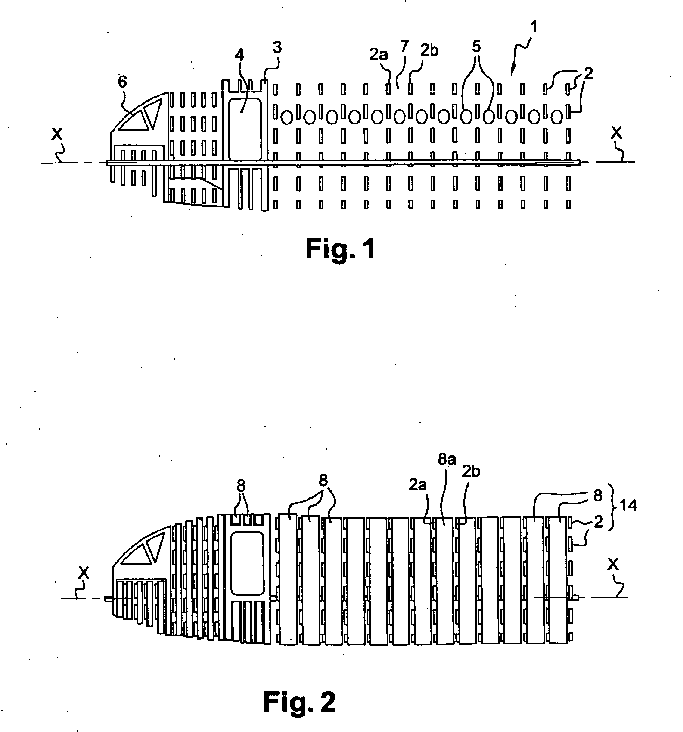

Sur la figure 1, on a représenté schématiquement l'étape de montage et d'assemblage de l'ossature interne d'un fuselage, conformément au procédé de l'invention. La figure 1 représente une ossature interne 1 assemblée autour d'un axe XX supportant le mandrin. Le mandrin n'est pas représenté sur la figure par mesure de simplification de la figure. Seul l'axe XX est représenté, le mandrin étant autour de cet axe. L'axe XX est fixé de part et d'autre à des supports formant un bâti de soutient de l'ossature interne, non représenté sur la figure par mesure de simplification. Cet axe XX peut aussi être en position verticale, et n'être fixé qu'à son extrémité inférieure, dans ce cas. Cette ossature interne 1 comporte des cadres 2, des lisses, des raidisseurs, des planchers et autres panneaux de structure. Elle comporte, par exemple, des sous-ensembles pré-assemblés 3 dont les découpes sont destinées à recevoir des portes 4, des hublots 5 ou encore des aménagements du poste de pilotage 6.

Comme montré sur la figure 1, lorsque les différents éléments de l'ossature interne sont montés et assemblés, la forme générale du fuselage de l'aéronef est perceptible. Pour faciliter l'installation et l'assemblage de l'ossature interne, les différentes pièces destinées à former l'ossature interne, et en particulier les cadres, peuvent être numérotées et repérées sur un plan.

pour faciliter également la construction de l'ossature interne, les pièces structurales et autres cadres peuvent être des pièces préfabriquées. Les cadres peuvent être installés d'un seul tenant, ce qui simplifie l'installation des différentes pièces de l'ossature interne. Par exemple, les cadres peuvent être réalisés sur 360°.

Lorsque l'ossature interne est assemblée, le procédé de l'invention comporte une opération d'installation des outillages coques entre les cadres de l'ossature interne. En effet, les cadres et autres pièces structurales sont espacés les uns des autres. Dans l'exemple de la figure 1, les cadres 2a et 2b sont séparés par un espace 7. Le procédé de l'invention propose de combler ces espaces au moyen d'outillages coques qui forment un habillage de l'ossature interne. Un exemple d'habillage d'ossature interne est représenté sur la figure 2. Cette figure 2 montre l'ossature interne 1 de la figure 1 après installation d'outillages coques 8 entre les cadres 2 et pièces structurales de ladite ossature.

Les outillages coques 8 sont des pièces ayant une courbure identique à la courbure externe de l'ossature interne. Autrement dit, les outillages coques 8 constituent des portions de surface aptes à être installées entre deux cadres ou deux ensembles de cadres de l'ossature. Les outillages coques peuvent avoir des dimensions sensiblement égales à l'espace entre deux cadres. Dans ce cas, chaque outillage coque est installé et fixé entre deux cadres. Les outillages coques peuvent aussi avoir des dimensions supérieures à l'espace entre deux cadres. Dans ce cas, chaque outillage coque peut être installé entre deux ensembles de cadres: Dans l'exemple de la figure 2, un outillage coque 8a a une forme de demi-cylindre. Cette coque 8a est alors installée entre un premier cadre 2a et un second cadre 2b. Cette coque 8a se reprend donc sur les cadres 2a à 2b. Un outillage coque peut ainsi être installé dans un inter-cadre, c'est-à-dire dans un espace entre deux cadres, ou bien dans un espace comportant plus d'un inter-cadre. Dans la suite de la description, on considérera que chaque outillage coque est installé entre deux cadres.

Les outillages coques peuvent former une portion de cylindre. Elles peuvent également avoir toute autre forme leur permettant d'épouser la forme extérieure de l'ossature interne. Lorsque les outillages coques sont installés sur toute la superficie de l'ossature interne, la structure obtenue est appelée structure pleine 14. Cette structure pleine 14 est donc une ossature interne dont les espaces sont comblés par des outillages coques. Cette structure pleine peut comporter quelques ouvertures qui correspondent à des aménagements spécifiques de l'aéronef tels que les portes ou les vitres du poste de pilotage.

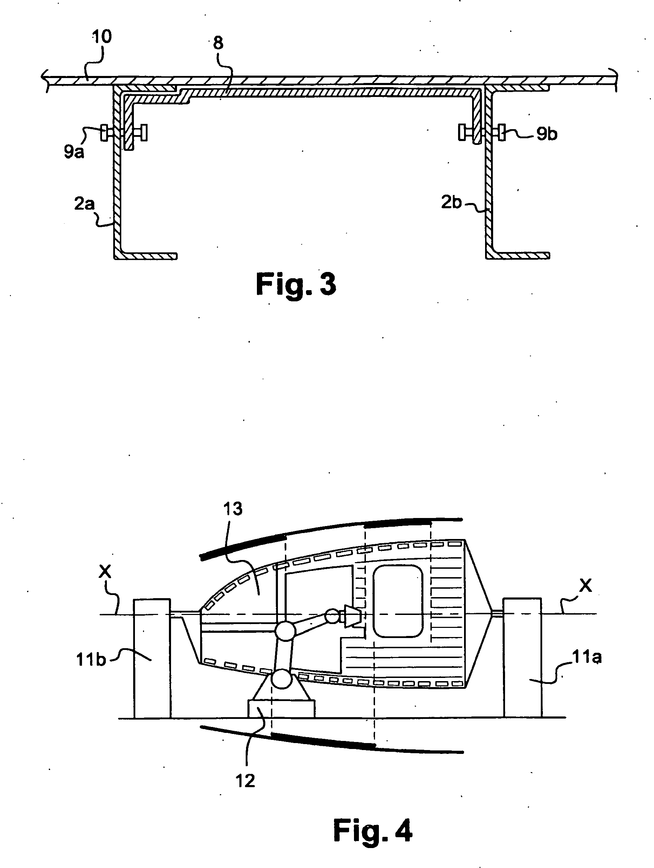

Sur la figure 3, on a représenté une vue en coupe partielle d'une structure pleine. Cette figure 3 montre donc, selon une vue de face en coupe, deux cadres 2a, 2b d'une ossature interne 1 entre lesquels est installée un outillage coque 8. Cet outillage coque 8 est fixé sur chaque cadre 2a et 2b au moyen d'une fixation amovible 9a, 9b. Cette fixation amovible peut être un boulon ou tout autre moyen de fixation pouvant être retiré ultérieurement, après fabrication de la peau externe 10. L'outillage coque 8 peut aussi être mis en position par les cadres 2a, 2b, mais fixé sur une autre partie de l'ossature interne 1.

Dans l'exemple de la figure 3, les cadres 2a, 2b ont une forme sensiblement en C. L'outillage coque 8 a une forme adaptée pour s'insérer entre le dos du C du cadre 2b et le fond du U du cadre 2a.

L'outillage coque 8a peut être réalisé en plusieurs parties afin de favoriser son insertion entre les cadres 2a et 2b. Dans ce cas, on parle d'assemblage puis désassemblage des outillages coques.

Dans l'exemple de la figure 3, on a représenté la peau externe 10 qui recouvre les cadres 2a et 2b ainsi que l'outillage coque 8. La figure 3 correspond donc à la structure pleine après fabrication de la peau externe et avant retrait des outillages coques. Les opérations de fabrication de la peau externe et de retrait des outillages coques vont maintenant être décrites.

Lorsque la structure pleine 14 est construit, le procédé de l'invention propose de réaliser la peau externe autour de ladite structure pleine. La structure pleine 14 constitue ainsi un moule pour la fabrication de la peau externe. En d'autres termes, l'ossature interne constitue une partie du moule de fabrication de la peau externe. L'autre partie du moule de fabrication de la peau externe est constituée par les outillages coques, cette autre partie étant retirée après fabrication de ladite peau externe.

Pour réaliser la peau externe, des rubans de fibres préenduites de résine sont placés tout autour de la structure pleine. Ces rubans de fibres préenduites sont déposés bande par bande sur tout le contour de la structure pleine.

Sur la figure 4, on a représenté un exemple d'un tronçon de fuselage installé sur le bâti 11 d'une machine à placement de fibres. Comme expliqué précédemment, l'ossature interne a été construite autour d'un axe XX reposant sur deux supports 11 a et 11 b formant le bâti 11 de la machine à placement de fibres. La structure pleine, une fois réalisée, se trouve donc montée autour de l'axe XX. Les supports du bâti 11 sont équipés de moteurs qui permettent entraîner l'axe XX en rotation. La structure pleine est ainsi entraînée en rotation par l'axe XX.

Une tête de placement 12, mobile, assure le placement du ruban de fibres préenduites sur la structure pleine. La structure pleine est ainsi recouverte, bande après bande, d'une couche de fibres préenduites 13. Lorsque la structure pleine est entièrement recouverte de fibres préenduites, ladite structure est introduite dans un four pour y être cuite. Sous l'effet de la chaleur, la résine polymérise de sorte que les rubans 13 créent un stratifié épousant la forme de la structure pleine et constituant la peau 10.

Il est à noter que les outillages coques sont réalisés dans un matériau tel que leur dilatation thermique n'est pas sensiblement différente de celle du ruban de fibres. Elles peuvent être réalisées, par exemple, dans un matériau composite. La cuisson de la structure pleine n'entraîne donc aucun problème de dilatation thermique différentielle entre les outillages coques et l'ossature interne. En outre, l'ossature interne ne crée pas non plus de problèmes de dilatation thermique, car elle est en matériaux composites. La cuisson de la structure pleine a donc uniquement des effets sur le ruban de fibres préenduites.

Lorsque le ruban de fibres est polymérisé, la peau externe est formée. Le procédé de l'invention propose alors de retirer les outillages coques.

Dans un mode de réalisation préféré de l'invention, les outillages coques sont recouverts d'un matériau favorisant leur démoulage, c'est-à-dire un matériau qui empêche toute adhérence de la résine. Dans une variante, les outillages coques sont réalisées dans un matériau anti-adhésif. Ainsi, la peau externe, une fois fabriquée, être collée à l'ossature interne, et notamment aux cadres de l'ossature interne, mais n'est pas collée aux outillages coques. Les outillages coques peuvent donc être déconnectés puis retirés aisément, depuis l'intérieur de l'ossature, tout en laissant ladite ossature interne en place, à l'intérieur de la peau externe.

Lorsque les outillages coques ont été retirés, des découpes peuvent être réalisées dans la peau externe pour obtenir des ouvertures destinées aux hublots, aux portes et autres aménagements.

On comprend donc que ce procédé permet un gain de temps considérable puisqu l'ossature interne est réalisée avant que la peau externe ne soit en place. Elle est donc réalisée sans contrainte d'espace. De plus, ce procédé nécessite uniquement la dépose et le retrait des outillages coques qui peuvent être respectivement en plusieurs parties pour être retirés plus facilement.

Par ailleurs, un fuselage obtenu avec le procédé de l'invention présente l'avantage de pouvoir être réalisé d'un seul tenant, sans nécessité de couture entre deux panneaux, ce qui permet un gain de temps, de masse, et une amélioration sensible de l'aérodynamisme de l'aéronef.

## Revendications

1. Procédé de fabrication d'un fuselage d'aéronef comportant une ossature interne (1) constituant au moins partiellement un moule (4) de fabrication de la peau externe en matériau composite, cette ossature interne étant entourée d'un peau externe (10) en matériau composite, ce procédé comportant les opérations suivantes :
- assemblage d'une pluralité de cadres (2) et pièces structurales pour former l'ossature interne (1) du fuselage,
- installation d'outillages coques (8) dans un espace entre au moins deux cadres de l'ossature et fixation de chacun de ces outillages sur les deux cadres au moyen d'une fixation amovible, pour obtenir une structure pleine (14),
- dépôt d'une couche de matériau composite (13) autour de la structure pleine (14),
- cuisson de la structure pleine recouverte de la couche de matériau composite, et
- retrait des outillages coques (8) pour obtenir l'ossature interne (1) recouverte de la peau externe (10), **caractérisé en ce que** l'assemblage des cadres (2) est exécuté autour d'un mandrin reposant sur un bâti.

2. Procédé selon la revendication 1, **caractérisé en ce que** la couche de matériau composite est déposée sous la forme de fibres imprégnées d'une résine.

3. Procédé selon la revendication 1 ou 2, **caractérisé en ce que** les cadres (2) de l'ossature interne (1) sont préfabriqués.

4. Procédé selon la revendication 3, **caractérisé en ce que** les cadres préfabriqués sont installés d'un seul tenant.

5. Procédé selon l'une quelconque des revendications 1 à 4, **caractérisé en ce que** les outillages coques (8) sont fixés sur les cadres (2) situés de part et d'autre desdits outillages coques.

6. Procédé selon l'une quelconque des revendications 1 à 5, **caractérisé en ce que** les outillages coques sont des portions de cylindres.

7. Procédé selon l'une quelconque des revendications 1 à 6, **caractérisé en ce que** les outillages coques sont réalisés en plusieurs parties favorisant leur insertion entre les cadres.

8. Procédé selon l'une quelconque des revendications 1 à 7, **caractérisé en ce que** les cadres sont montés sur un bâti apte à soutenir l'ossature interne.

## Claims

1. Method for manufacturing an aircraft fuselage comprising an inner framework (1) constituting, at least partially, a manufacturing mould (4) of the outer skin in composite material, such inner framework being surrounded by an outer skin (10) in composite material, this method comprising the following operations:
- assembly of a plurality of frames (2) and structural elements for forming the inner framework (1) of the fuselage,
- installation of hulls tools (8) in a space between at least two frames of the framework and the fixing of each one these tools onto the two frames by way of a removable fastening, in order to obtain a solid structure (14),
- deposit of a layer of composite material (13) around the solid structure (14),
- baking of the solid structure covered with a layer of composite material, and
- removal of the hull tools (8) in order to obtain the inner framework (1) covered with the outer skin (10), **characterised in that** the frame assembly (2) is erected around a mandrel resting on a stand.

2. A method according to claim 1, **characterised in that** the layer of composite material is deposited in the form of resin-impregnated fibres.

3. A method according to claims 1 or 2, **characterised in that** the frames (2) of the inner framework (1) are prefabricated.

4. A method according to claim 3, **characterised in that** the prefabricated frames are installed all in one block.

5. A method according to any one of claims 1 to 4, **characterised in that** the hulls tools (8) are fixed to the frames (2) located on either side of said hull tools.

6. A method according to any one of the claims 1 to 5, **characterised in that** the hulls tools are portions of cylinders.

7. A method according to any one of the claims 1 to 6, **characterised in that** the hulls tools are embodied in several parts, facilitating their insertion in between the frames.

8. A method according to any one of the claims 1 to 7, **characterised in that** the frames are mounted on a stand capable of supporting the internal framework.

## Patentansprüche

1. Verfahren zur Herstellung eines Flugzeugrumpfes mit einem inneren Gerippe (1), das zumindest teilweise eine Form (4) zur Herstellung der Außenhaut aus Verbundmaterial bildet, wobei dieses innere Gerippe von einer Außenhaut (10) aus Verbundmaterial umgeben ist, wobei dieses Verfahren folgendes enthält :
- das Zusammenfügen einer Vielzahl von Rahmen (2) und Strukturteilen zur Bildung des inneren Gerippes (1) des Rumpfes,
- das Anbringen von Rumpfwerkzeugen (8) in einem Freiraum zwischen zumindest zwei Rahmen des Gerippes und die Befestigung jedes dieser Werkzeuge auf den beiden Rahmen mithilfe einer abnehmbaren Befestigung zum Erhalt einer vollen Struktur (14),
- das Aufbringen einer Verbundmaterialschicht (13) rund um die volle Struktur (14),
- das Brennen der mit der Verbundmaterialschicht überzogenen vollen Struktur, und
- das Entfernen der Rumpfwerkzeuge (8) für den Erhalt des inneren Gerippes (1), das mit der Außenhaut (10) überzogen ist, **dadurch gekennzeichnet, dass** das Zusammenfügen der Rahmen (2) rund um einen Dorn erfolgt, der auf einem Gestell aufliegt.

2. Verfahren nach Anspruch 1, **dadurch gekennzeichnet, dass** die Verbundmaterialschicht in Form von Fasern aufgebracht wird, die in ein Harz getränkt sind.

3. Verfahren nach Anspruch 1 oder 2, **dadurch gekennzeichnet, dass** die Rahmen (2) des inneren Gerippes (1) vorgefertigt sind.

4. Verfahren nach Anspruch 3, **dadurch gekennzeichnet, dass** die vorgefertigten Rahmen in einem Stück angebracht werden.

5. Verfahren nach irgendeinem der Ansprüche 1 bis 4, **dadurch gekennzeichnet, dass** die Rumpfwerkzeuge (8) auf den Rahmen (2) befestigt werden, die sich beiderseits der besagten Rumpfwerkzeuge befinden.

6. Verfahren nach irgendeinem der Ansprüche 1 bis 5, **dadurch gekennzeichnet, dass** die Rumpfwerkzeuge Zylinderabschnitte sind.

7. Verfahren nach irgendeinem der Ansprüche 1 bis 6, **dadurch gekennzeichnet, dass** die Rumpfwerkzeuge in mehreren Teilen gefertigt werden, wodurch das Einfügen zwischen die Rahmen erleichtert wird.

8. Verfahren nach irgendeinem der Ansprüche 1 bis 7, **dadurch gekennzeichnet, dass** die Rahmen auf einem Gestell montiert werden, das in der Lage ist, das innere Gerippe zu tragen.
